# EUROPÄISCHE PATENTSCHRIFT

(11) **EP 3 077 343 B1**
(45) Veröffentlichungstag und Bekanntmachung des Hinweises auf die Patenterteilung: **25.11.2020**
(21) Anmeldenummer: 14814764.8
(22) Anmeldetag: 04.12.2014
(51) Int. Cl.: C04B 7/12, C04B 7/26

(54) **VERFAHREN ZUR HERSTELLUNG EINES PUZZOLANEN ODER LATENT-HYDRAULISCHEN ZEMENTKLINKERSUBSTITUTS**
METHOD FOR PRODUCING A POZZOLANIC OR LATENT-HYDRAULIC CEMENT CLINKER SUBSTITUTE
PROCÉDÉ DE FABRICATION D'UN SUBSTITUT DE CLINKER DE CIMENT HYDRAULIQUE LATENT OU PUZZOLANIQUE

(30) Priorität: 04.12.2013 DE 102013113475
(43) Veröffentlichungstag der Anmeldung: 12.10.2016
(73) Patentinhaber: thyssenkrupp Industrial Solutions AG, 45143 Essen (DE); thyssenkrupp AG, 45143 Essen (DE)
(72) Erfinder: ROHLOFF, Kathrin, 20457 Hamburg (DE); ENDERS, Michael, 48143 Münster (DE)
(74) Vertreter: thyssenkrupp Intellectual Property GmbH
(86) Internationale Anmeldenummer: PCT/EP2014/003252
(87) Internationale Veröffentlichungsnummer: WO 2015/082075

(56) Entgegenhaltungen:
- CN-A- 103 360 033
- DE-A1-102011 014 498
- GB-A- 2 247 306
- US-A- 3 941 872
- US-A1- 2008 282 947

## Beschreibung

Die Zementindustrie verursacht jährlich CO₂-Emissionen in der Größenordnung von 4 Gt. Man ist daher bestrebt, die CO₂-Emissionen pro Tonne Zement durch Maßnahmen, wie Brennstoffe aus Biomasse, Restwärmerückgewinnung, Substitution von Zementklinker durch Puzzolane oder die Abscheidung des CO₂ aus Rauchgasen zu reduzieren. Besonders effektiv ist dabei die Reduktion des Klinkerfaktors, indem ein Teil des Klinkers durch puzzolane Stoffe, wie Hüttensand, Flugasche, natürliche Puzzolane oder Kalkstein ersetzt wird. Um einen globalen Klinkerfaktor von derzeit 76 (wwwb.wbcsdcement.or) zu halten, besteht bei einer jährlichen Zementproduktion von etwa 4 Gt ein Bedarf von etwa 1 Gt an Klinkersubstituten. Bei der weltweit steigenden Produktion von Zement wird der Bedarf an Klinkersubstituten außerdem weiter steigen.

Die Entscheidung für ein Bindemittelsubstitut wird nach der regionalen Verfügbarkeit des Materials und den dafür anfallenden Kosten für die Gewinnung und die Logistik getroffen. Jedes Klinkersubstitut (Kalkstein, Hüttensand, Flugasche, Puzzolan) weist zudem im Zement einen spezifischen Beitrag zu Hydratationsreaktionen und damit der Festigkeitsentwicklung auf.

Abhängig von der Anwendung des Zements und den Regelungen für die Bindemittelzusammensetzung und den Betonnormen sind in Europa außerhalb der Nebenbestandteile (0-5 %) Substitutionen des Klinkers von 5 - 95% (CEM II A/B, CEM IIIC) zulässig. Insbesondere Kalkstein kann aber ohne einen maßgeblichen Leistungsverlust des Bindemittels meist nur bis etwa 20% zudosiert werden. Andere national gültige Standardwerke sind anstelle der Bindemittelzusammensetzung allein auf die Leistungsfähigkeit des Bindemittels ausgerichtet und erlauben auch höhere Zudosierungen puzzolaner Additive (z.B. ASTM C595, SNI 15-0302-2004) oder sind hinsichtlich der Zementzusammensetzung völlig ungeregelt (ASTM C1157).

Ein weiteres, bisher aber nur wenig genutztes Klinkersubstitut, sind kalzinierte Tone, die als Klinkerersatzstoff und Additiv in Zement und Beton eingesetzt werden können. In der DE 10 2011 014 498 B4 wird ein Verfahren zur Herstellung eines Klinkerersatzstoffes aus kalziniertem Ton näher beschrieben.

Tonminerale sind Schichtsilikate, die durch eine gestapelte Wechsellagerung von siliziumreichen, aluminiumreichen oder silizium- und aluminiumreichen Schichten mit Zwischenschichten aus Hydroxid, Alkalien oder Wasser gekennzeichnet sind. Kostengünstige Tone weisen zudem oft Verunreinigungen, z. B. durch erhöhte Eisengehalte, auf. Insbesondere erhöhte Eisengehalte können je nach Vorkommen des Eisens bei der Kalzination zu einer typischen Rotverfärbung führen, die zunächst im kalzinierten Ton, dann aber auch bei der Verwendung als Klinkerersatz im Zement und Beton durch das rotfärbende, dreiwertige Eisen erscheint.

Als Klinkersubstitut für Bindemittel kommen aufgrund der Kosten für hochreine Tone nur einfache, kostengünstige Qualitäten in Frage. Tonvorkommen - insbesondere solche geringer Reinheitsmerkmale - sind weit verbreitet. Zur Korrektur der Rotverfärbung wird in der DE 2011 014 498 B4 ein besonderes Kühlverfahren unter reduzierenden Bedingungen oder die Eindüsung von Öl in einen Kühler zur Erzeugung einer reduzierenden Atmosphäre vorgeschlagen. Dabei wird in der reduzierenden Atmosphäre bis zu 1/3 des rotfärbenden, dreiwertigen Eisen im Hämatit reduziert und es bildet sich der grau gefärbte Eisen-Eisen-Spinell (Magnetit). Der grauen Farbe kann eine besondere Bedeutung bei der Akzeptanz des Zements durch den Endkunden zukommen.

Bei der Kalzination von Ton, die beispielsweise in einem Drehrohr, einem Schwebewärmetauscher, einer Wirbelschicht oder auch in einem Etagenofen durchgeführt wird, geben die Tonminerale zunächst Oberflächenwasser ab und verlieren dann Strukturwasser. Eine Folge dieser Wasserabgabe ist der Phasenübergang der kristallinen Tonminerale in röntgenamorphe Meta-Tonminerale. Bei weiterer Aufheizung (500 - 1250°C) der Tonminerale bilden sich durch Aufschmelzen der Meta-Tonminerale entweder Alumino-Silikatgläser oder aber bei geeigneter chemisch/mineralogischer Zusammensetzung auch Hochtemperaturphasen wie Mullit oder Cristobalit. Die Flammentemperatur einer internen Feuerung ist im Niedrigtemperaturbereich schwierig zu regeln. Aus diesem Grund werden für die Kalzination von Tonen meist externe Brennkammern eingesetzt und das Heißgas wird mit kühlerer Außenluft auf die gewünschte Prozesstemperatur für die Kalzination eingestellt. Ein inhärenter Nachteil dieses Verfahrens ist der hohe Luftüberschuss mit der Gefahr einer weitgehenden Oxidation der Eisenverbindungen aus den Tonrohstoffen.

Die puzzolanen Eigenschaften der kalzinierten Tone sind günstig für den Einsatz als Klinkersubstitut. Eine weitere günstige Lösung wäre es, kalzinierte Tone mit solchen Materialien - zum Beispiel Flugaschen - zu verbinden, die andere Eigenschaften des Zements (z.B. die Verarbeitbarkeit, den Wasseranspruch oder die hydraulische Reaktivität) verbessern oder eine höhere Klinkersubstitutionsrate ermöglichen. Es ist bekannt, Kompositzemente mit kalziniertem Ton und Flugasche durch die gemeinsame Vermahlung oder eine Mischung in einer Mischanlage zu erzeugen. In beiden Fällen sind jedoch neben einer Kalzinationsanlage noch weitere Lager- und zugehörige Förder- und Mischeinrichtungen für alle Komponenten des Mischzements erforderlich.

Die US 3 941 872 A betrifft ein Verfahren zur Herstellung von calcinierten Tonpigmenten, wobei Ton zusammen mit Kohle calciniert wird. In der GB 2 247 306 A wird ein Verfahren zur Calcination von Ton in einem Wirbelbett beschrieben, wobei insbesondere Kohle als Brennstoff zusammen mit Tonpartikeln vor der Calcination zugegeben werden. Des Weiteren wird in der CN 103 360 033 A die Herstellung von Ziegeln offenbart, die insbesondere aus 50 bis 60% Kohleasche und 30 bis 40% Ton bestehen, wobei die Formlinge zunächst getrocknet und anschließend bei Temperaturen von 1.200 bis 1.300°C für 38 bis 42 min calciniert werden.

Die US 2008/282947 A1 betrifft ein Verfahren zur Verbesserung der Eigenschaften von Flugasche durch Behandlung mit bereits kalziniertem Ton.

Der Erfindung liegt die Aufgabe zugrunde, ein Verfahren zur Herstellung eines puzzolanen oder latent-hydraulischen Zementklinkersubstituts anzugeben, das sich durch eine kostengünstigere und schnellere Herstellung auszeichnet.

Erfindungsgemäß wird diese Aufgabe durch die Merkmale des Anspruches 1 gelöst.

Beim erfindungsgemäßen Verfahren zur Herstellung eines puzzolanen oder latent-hydraulischen Zementklinkersubstituts wird Ton bei Temperaturen im Bereich von 500-1250°C, vorzugsweise von 550-1150°C, höchstvorzugsweise von 700-900°C, mit einem eine mineralische Substanz aufweisenden Brennstoff in einem Kalzinator kalziniert, wobei die dabei entstehende Mischung aus der mineralischen Substanz des Brennstoffs und dem kalzinierten Ton das puzzolane oder latent-hydraulische Zementklinkersubstitut bildet, wobei ein Brennstoff zur Kalzination des Tons verwendet wird, sodass der Anteil der durch den Brennstoff in das hydraulische Zementklinkersubstitut eingebrachten mineralischen Substanz wenigstens 20 bis 40 Gew.-% im Zementklinkersubstitut beträgt und dem Kalzinator ein zusätzlicher Stoffstrom, nämlich Flugasche mit einem Kohlenstoffanteil von wenigstens 0.5 Gew.-% zugeführt.

Beim erfindungsgemäßen Verfahren wird die Mischung aus kalziniertem Ton und der mineralischen Substanz, wie insbesondere Flugasche, bereits während des Kalzinationsprozesses erzeugt. Es ist somit weder das Lagern und Fördern einzelner Bestandteile (kalzinierter Ton und Flugasche) noch ein separater Mischvorgang erforderlich.

Weiter Ausgestaltungen der Erfindung sind Gegenstand der Unteransprüche.

Die bevorzugten Brennstoffe bzw. die sich aus diesen ergebende mineralische Substanz weist vorzugsweise ein Verhältnis von Al₂O₃ zu SiO₂ von 0.13 - 1.4 Gew.-%, vorzugsweise 0.26 - 0.87 Gew.-% und ein CaO-Gehalt von kleiner 80 Gew.-%, vorzugsweise 0.5 - 50 Gew.-% auf.

Erdgas und Erdöl zählen daher nicht zu den bevorzugten Brennstoffen, da sie aufgrund der hohen Brennwerte von 35 - 50 MJ/kg und des niedrigen Aschegehalts von unter 2 - 3 Gew.-% bei einem durchschnittlichen Energiebedarf von 2 - 3 MJ/Kg für die Kalzination des kalzinierten Tons nur geringe Ascheanteile von 0.1 - 1 Gew.-% aus dem Brennstoff in das Zementklinkersubstitut einbringen. Außerdem besteht im Falle des Erdöls die Problematik, dass bei der Verbrennung z.B. Vanadium- und Chromverbindungen freigesetzt werden, die in den Verbrennungsanlagen korrosiv wirken und daher unerwünscht sind. Auch im Zementklinkersubstitut sind erhöhte Chromgehalte aufgrund der eventuellen Cr6⁺-Gehalte nachteilig. Rückstände der Abfallverbrennung sind vielfach auch sehr beschränkt einsetzbar, da bei der Verbrennung von Kunststoffen, insbesondere Chloride freigesetzt werden, die dann im Zementklinkersubstitut eingebunden werden und sehr schnell den Grenzwert von 0.1 Gew.-% Chlor in Bindemittel überschreiten würden. Ferner ist darauf zu achten, dass der gesamte Alkaligehalt des Zementklinkersubstituts unter 4 Gew.-% liegt, um die unerwünschten Alkalisilikatreaktionen zu begrenzen. Besonders geeignet haben sich für das puzzolane oder latent-hydraulische Zementklinkersubstitut Alkaligehalte von 0.25 - 2.5 Gew.-%. Brennstoffe mit erhöhten Phosphorgehalten, wie dies beispielsweise bei Klärschlamm der Fall sein kann, sind ebenfalls zu meiden oder dem Regelbrennstoff nur in geringen Mengen zuzusetzen, da der Phosphorgehalt in der Praxis in Zementen auf 0.5 Gew.-% beschränkt ist, sodass erhöhte Phosphorgehalte bei Einsatz von Klärschlamm das gesamte Verfahren stark beeinträchtigen würde.

Als besonders vorteilhaft hat sich daher Kohle als Brennstoff herausgestellt.

Die Eigenschaften des erfindungsgemäß hergestellten puzzolanen oder latent-hydraulischen Zementklinkersubstituts lassen sich auf vielfältige Art und Weise beeinflussen. So wird das Verhältnis von kalziniertem Ton und mineralischer Substanz im Wesentlichen durch den verwendeten Brennstoff bestimmt, wobei neben dem im Brennstoff vorhandenen Anteil der mineralischen Substanz (insbesondere Aschegehalt) auch der Heizwert von entscheidender Bedeutung ist. Da für die Kalzination von Ton eine bestimmte Wärmemenge erforderlich ist, hängt die zu verwendende Brennstoffmenge und damit die über den Brennstoff eingebrachte Menge an mineralischer Substanz im Wesentlichen vom Heizwert des Brennstoffs ab. Für die Kalzination des Tons wird vorzugsweise Brennstoff, insbesondere Kohle, mit einem Heizwert im Bereich von 3.500 - 35.000 kJ/kg eingesetzt. Die gewünschte Menge an mineralischer Substanz kann daher gezielt durch den zu verwendenden Brennstoff bzw. Mischungen aus verschiedenen Brennstoffen festgelegt werden. Je nach gewünschten Eigenschaften des Zementklinkersubstituts wird der Anteil der dem Kalzinationsprozess zugeführten mineralischen Substanz so bemessen, dass sich im Zementklinkersubstitut ein vorgegebenes Mischungsverhältnis von kalziniertem Ton und mineralischer Substanz im Bereich von 0.5:1 - 20:1 einstellt.

Eine weitere Stellschraube für die Eigenschaften des Zementklinkersubstituts ist die Kornverteilung des für die Kalzination zu verwendenden Brennstoffs und/oder die Zusammensetzung der im Brennstoff enthaltenen mineralischen Substanz. So kann beispielsweise die Verarbeitbarkeit, insbesondere der Wasseranspruch des Zementklinkersubstituts, durch Zerkleinerung des Brennstoffs auf eine vorgegebene Kornverteilung eingestellt werden. Vorzugsweise wird der Brennstoff, insbesondere Kohle mit einer Korngröße im Bereich von z.B. 0.025 - 4 mm bevorzugt kleiner 1 mm eingesetzt. In entsprechender Weise hat natürlich auch die Korngröße des Tons einen Einfluss auf die Eigenschaften des erfindungsgemäß hergestellten Zementklinkersubstituts. Der Ton wird daher vor der Kalzination auf Korngrößen < 10mm, vorzugsweise < 5mm, insbesondere < 2mm und höchstvorzugsweise < 1mm gemahlen. Je feiner der zu kalzinierende Ton ist, umso schneller und vollständiger erfolgt die Kalzination. Die Kalzination kann beispielsweise in einem Schwebewärmetauscher, einem Drehrohrofen, einer Wirbelschicht oder einem Etagenofen durchgeführt werden. Im Rahmen der Erfindung ist es möglich, die chemische Substanz der sich beim Kalzinationsprozess ergebenden, mineralischen Substanz durch Verwendung einer Mischung von Brennstoffen mit unterschiedlicher Zusammensetzung an mineralischer Substanz zu regeln.

Weiterhin besteht die Möglichkeit, einen Zement durch gemeinsames Mahlen eines Zementklinkers mit dem oben näher beschriebenen Zementklinkersubstitut herzustellen oder getrennt zerkleinertes Klinkersubstitut und getrennt vermahlenen Zementklinker zu Zement zu mischen.

Weitere Vorteile und Ausgestaltungen der Erfindung werden anhand der nachfolgenden Beschreibung und der Zeichnung näher erläutert.

In der Zeichnung zeigen
- Fig. 1: eine schematisches Blockschaltbild des erfindungsgemäßen Verfahrens mit einem Kalzinator mit interner Feuerung und
- Fig. 2: eine schematisches Blockschaltbild des erfindungsgemäßen Verfahrens mit einem Kalzinator mit externer Feuerung.

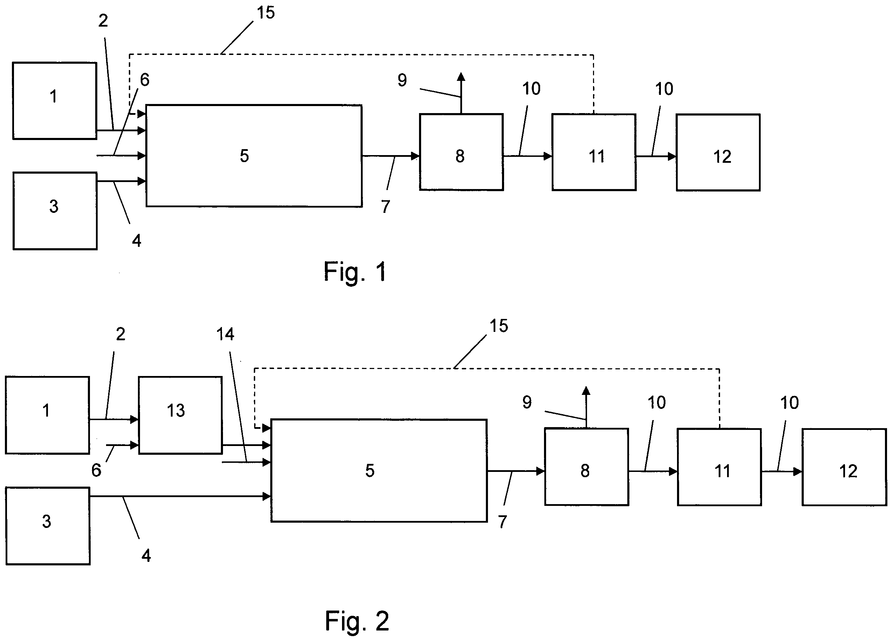

Im Ausführungsbeispiel gemäß Fig. 1 wird ein Brennstoff 2 mit geeigneten Eigenschaften und Kohlenstoffgehalten aus einem Brennstofflager 1 über ein nicht näher dargestelltes Brennaggregat einem Kalzinator 5 aufgegeben. Parallel hierzu wird aus einem Tonlager 3 vorbereiteter Ton 4 dem Kalzinator zugeführt. Darüber wird dem Kalzinator 5 ein zusätzlicher Stoffstrom 6 in Form von Flugasche mit einem Kohlenstoffanteil von wenigstens 0.5 Gew.-% zugeführt.

Im Kalzinator wird der zugeführte Ton 4 entwässert und das Strukturwasser wird ausgetrieben, sodass Meta-Ton erzeugt wird. Die im Kalzinator 5 erzeugte Gas-Feststoff-Suspension 7 wird in einem nachfolgend Zyklon 8 in ein Gasbestandteil 9 und einen Feststoffbestandteil getrennt, wobei es sich bei dem Feststoffbestandteil um ein puzzolanes oder latent-hydraulisches Zementklinkersubstitut 10 handelt, das aus einer Mischung aus dem kalizinierten Ton und der durch den Brennstoff eingebrachten mineralischen Substanz besteht. Das Zementklinkersubstitut 10 wird nachfolgend in einem Kühler 11, beispielsweise einem Trommelkühler oder einem Schubrostkühler, gekühlt. Es kommen aber auch Wirbelschichtkühler, Schachtkühler, Schneckenkühler oder ähnliche Aggregate in Betracht. Selbst gestaffelte Kühlungen mit mehreren Aggregaten sind denkbar. Die bei der Kühlung anfallende warme Abluft 15 kann verworfen oder ganz oder teilweise rekuperiert werden. Hier bietet sich beispielsweise die Verwendung in einem Steigrohrtrockner zum Trocknen des Tons und oder Brennstoffs oder als Regelluft im Kalzinator 5 an. Eine separate Nutzung der Abwärme für einen weiteren Prozess in direkter oder indirekter Form ist ebenfalls möglich. Ebenfalls kann die Abwärme der Verstromung zugeführt werden. Nach dem Kühler 11 wird das Zementklinkersubstitut in einem Lager 12, beispielsweise einem Bunker oder Silo, gelagert.

Bei dem in Fig. 1 dargestellten Ausführungsbeispiel ist der Kalzinator 5 mit einer internen Feuerung ausgestattet, sodass der Brennstoff 2 im Kalzinator 5 verbrannt wird. Alternativ hierzu ist es gemäß Fig. 2 aber auch denkbar, dass der Brennstoff 2 und ggf. weitere Stoffströme 6 in einer externen Brennkammer 13 verbrannt werden und das dabei entstehende Rauchgas zusammen mit der entstehenden mineralischen Substanz nach der Verbrennung dem Kalzinator 5 zusammen mit dem Ton 4 zugeführt wird. Die Regelung der Kalzinationstemperatur erfolgt über die Einleitung von Frischluft 14 oder durch Mischung von Frischluft und warmer Abluft 15 aus dem Kühler 11.

Bei der Ausführung mit interner Feuerung gemäß Fig. 1 hat sich ein Mischungsverhältnis von kalziniertem Ton und mineralischer Substanz im Bereich von 0.5:1 - 20:1 als besonders günstig erwiesen. Dies wird zum Beispiel erreicht, wenn eine Kohle mit einem niedrigen Heizwert von nur 4.000 kJ/kg mit einem mittleren Aschegehalt von 40% zur Feuerung genutzt wird. Bei abweichenden Kohlequalitäten sind andere Verhältnisse von kalziniertem Ton zu mineralischer Substanz nach den gewünschten Produkteigenschaften durch Auswahl der Rohmaterialien einstellbar. Des Weiteren können über die Kornverteilung die gewünschten Eigenschaften des entstehenden Zementklinkersubstituts beeinflusst werden, indem die Feinheit des zu kalzinierenden Tons 4 bzw. die Feinheit des verwendeten Brennstoffs entsprechend ausgewählt wird. Über die zusätzlichen Stoffströme 6 können weitere kohlenstoffhaltige und kohlenstofffreie Stoffströme direkt oder nach einem Aufbereitungsschritt (Sichtung, Mahlung) mit dem Ziel der Optimierung des Zementklinkersubstituts zugegeben werden.

Die Brennstoffe für den Prozess werden mit einem dafür geeigneten Aggregat zum Beispiel einer Mühle auf einen Rückstandswert kleiner 10 % auf 150 µm bevorzugt kleiner 2 % auf 75 µm aufbereitet. Abhängig von der Brennstoffqualität, dem Aschegehalt und der Zündtemperatur des Brennstoffs sind jedoch auch Rückstandswerte bis zu 20 % auf 200 µm denkbar. Die Aufmahlung der Brennstoffe ist hinsichtlich des Aschegehalts einzustellen, um eine die Zementeigenschaften verbessernde Wirkung zu erreichen.

Der Ton für die Kalzination wird nach der Gewinnung aus einem Lager einer Zerkleinerungseinrichtung und einer Trocknungseinrichtung oder einer Kombination aus beiden zugeführt. Hierzu kommen Standardaggregate zur Vermahlung und Sichtung in Frage. Als besonderes geeignet im Hinblick auf den notwendigen Energieverbrauch und die Kopplung beider Prozesse (Mahlung, Trocknung) hat sich die Schlägermühle erwiesen. Für den Betrieb des Kalzinationsaggregats haben sich Korngrößen < 10mm, bevorzugt < 5mm, insbesondere < 2 mm, bevorzugt < 1 mm als ausreichend erwiesen. Im Hinblick auf die späteren Produkteigenschaften, kann an dieser Stelle der Zerkleinerungsschritt oder Sichtschritt gezielt eingestellt werden. Die Vorwärmung und Trocknung kann durch eine Weiterbehandlung in einem Steigrohrtrockner optimiert werden. Mit der Aufmahlung kann der Ausbrand der Wärmeübergang und die mögliche Reduktion von Eisenkomponenten zur Farbkorrektur gesteuert werden.

Zur Temperaturregelung des Kalzinationsprozesses wird die Guttemperatur im Kalzinationsaggregat und im Produkt aus dem Kalzinationsaggregat aufgenommen. Die gewünschte Prozesstemperatur wird durch Zuleiten von Oxidationsmittel z.B. Luft eingestellt.

Eine weitere Möglichkeit bietet sich für Flugaschen, die aufgrund erhöhter Kohlenstoffgehalte oder anderer nichtidealer Eigenschaften (Freikalkgehalte, Anhydritgehalte) faktisch oder aufgrund der Regelwerke nicht für die Verwendung in Zement oder Beton geeignet sind. Diese Aschen können gemeinsam mit dem zu kalzinierenden Ton oder dem Brennstoff auf das Kalzinieraggregat aufgegeben werden. Bei der thermischen Behandlung oxidieren vorhandene Koksteilchen. Zudem werden calciumhaltige Minerale wie Freikalk oder Anhydrit, die in calciumreichen Flugaschen in erheblichen Anteilen vorkommen können, durch intensive Mischung mit dem Metaton relativ abgereichert oder im Einzelfall durch Reaktion mit Meta-Tonteilchen aus der Flugasche oder dem zu kalzinierenden Ton direkt in die glasigen Flugaschebestandteile eingebunden. Ein weiterer Vorteil dieses Verfahrens ist die Oxidation der kohlenstoffreichen Bestandteile und eine daraus abgeleitete zusätzliche Wärmequelle für die Kalzination.

## Patentansprüche

1. Verfahren zur Herstellung eines puzzolanen oder latent-hydraulischen Zementklinkersubstituts (10), bei dem Ton (4) bei Temperaturen im Bereich von 500 bis 1250 °C mit einem eine mineralische Substanz aufweisenden Brennstoff (2) in einem Kalzinator (5) kalziniert wird, wobei die dabei entstehende Mischung aus der mineralischen Substanz des Brennstoffs (2) und dem kalzinierten Ton (4) das puzzolane oder latent-hydraulische Zementklinkersubstitut (10) bildet,
**dadurch gekennzeichnet, dass** ein Brennstoff (2) zur Kalzination des Tons verwendet wird, sodass der Anteil der durch den Brennstoff (2) in das hydraulische Zementklinkersubstitut (10) eingebrachten mineralischen Substanz wenigstens 20 bis 40 Gew.-% im Zementklinkersubstitut beträgt und
dem Kalzinator (5) ein zusätzlicher Stoffstrom, nämlich Flugasche mit einem Kohlenstoffanteil von wenigstens 0.5 Gew.-% zugeführt.

2. Verfahren nach Anspruch 1 **dadurch gekennzeichnet, dass** ein Brennstoff zur Kalzination des Tons (4) verwendet wird, dessen in das hydraulische Zementklinkersubstitut (10) eingebrachte mineralischen Substanz ein Verhältnis von Al₂O₃ zu SiO₂ von 0.13 - 1.4 Gew.-% und ein CaO-Gehalt von kleiner 80 Gew.-% aufweist.

3. Verfahren nach Anspruch 1 **dadurch gekennzeichnet, dass** die Eigenschaften des Zementklinkersubstituts (10) durch die Kornverteilung des für die Kalzination zu verwendenden Brennstoffs (2) und/oder die Zusammensetzung der im Brennstoff (2) enthaltenen mineralischen Substanz eingestellt wird.

4. Verfahren nach Anspruch 1 **dadurch gekennzeichnet, dass** die Verarbeitbarkeit des Zementklinkersubstituts (10) durch Zerkleinerung des Brennstoffs (2) auf eine vorgegebene Kornverteilung eingestellt wird.

5. Verfahren nach Anspruch 1 **dadurch gekennzeichnet, dass** die chemische Zusammensetzung der sich beim Kalzinationsprozess ergebenden, mineralischen Substanz durch Verwendung einer Mischung von Brennstoffen mit unterschiedlicher Zusammensetzung der mineralischen Substanz geregelt wird.

6. Verfahren nach Anspruch 1, **dadurch gekennzeichnet, dass** die Kalzination in einem Schwebewärmetauscher, einem Drehrohrofen, einer Wirbelschicht oder einem Etagenofen durchgeführt wird.

7. Verfahren nach Anspruch 1, **dadurch gekennzeichnet, dass** der Ton (4) vor der Kalzination auf Korngrößen < 10 mm zerkleinert wird.

8. Verfahren nach Anspruch 1, **dadurch gekennzeichnet, dass** der Anteil der dem Kalzinationsprozess zugeführten mineralischen Substanz so bemessen wird, dass sich im Zementklinkersubstitut (10) ein vorgegebenes Mischungsverhältnis von kalziniertem Ton (4) und mineralischer Substanz im Bereich von 0.5 : 1 bis 20 : 1 einstellt.

9. Verfahren nach Anspruch 1, **dadurch gekennzeichnet, dass** für die Kalzination des Tons (4) ein Brennstoff (2), vorzugsweise Kohle, mit einer Korngröße im Bereich von 0.05 bis 1 mm eingesetzt wird.

10. Verfahren nach Anspruch 1, **dadurch gekennzeichnet, dass** für die Kalzination des Tons (4) ein Brennstoff (2), vorzugsweise Kohle, mit einem Heizwert im Bereich von 3500 bis 35000 kJ/kg eingesetzt wird.

11. Verfahren zur Herstellung eines Zements durch gemeinsames Mahlen eines Zementklinkers mit dem Zementklinkersubstitut (10), hergestellt durch ein Verfahren gemäß einem oder mehreren der vorhergehenden Ansprüche.

## Claims

1. Method for producing a pozzolanic or latent-hydraulic cement clinker substitute (10) by calcining clay (4) at temperatures in the range from 500 to 1250°C with a fuel (2) comprising a mineral substance in a calciner (5), in which the resulting mixture of the mineral substance from the fuel (2) and the calcined clay (4) forms the pozzolanic or latent-hydraulic cement clinker substitute (10),
**characterized in that** the clay is calcined using a fuel (2) such that the fraction of mineral substance incorporated into the hydraulic cement clinker substitute (10) by the fuel (2) is at least 20 to 40 wt% in the cement clinker substitute, and
the calciner (5) is supplied with an additional stream of material, namely flyash having a carbon fraction of at least 0.5 wt%.

2. Method according to Claim 1, **characterized in that** the clay (4) is calcined using a fuel whose mineral substance incorporated into the hydraulic cement clinker substitute (10) has a ratio of Al₂O₃ to SiO₂ of 0.13-1.4 wt% and a CaO content of less than 80 wt%.

3. Method according to Claim 1, **characterized in that** the properties of the cement clinker substitute (10) are adjusted via the particle size distribution of the fuel (2) used for calcining and/or via the composition of the mineral substance contained in the fuel (2).

4. Method according to Claim 1, **characterized in that** the workability of the cement clinker substitute (10) is adjusted by comminuting the fuel (2) to a mandated particle size distribution.

5. Method according to Claim 1, **characterized in that** the chemical composition of the mineral substance resulting from the calcining operation is regulated by using a mixture of fuels having different mineral substance compositions.

6. Method according to Claim 1, **characterized in that** the calcining is carried out in a suspension-type heat exchanger, a rotary kiln, a fluidized bed or a multitier furnace.

7. Method according to Claim 1, **characterized in that** the clay (4), before being calcined, is comminuted to particle sizes < 10 mm.

8. Method according to Claim 1, **characterized in that** the fraction of the mineral substance supplied to the calcining operation is calculated so as to bring about in the cement clinker substitute (10) a mandated mixing ratio of calcined clay (4) to mineral substance in the range from 0.5:1 to 20:1.

9. Method according to Claim 1, **characterized in that** the clay (4) is calcined using a fuel (2), preferably coal, having a particle size in the range from 0.05 to 1 mm.

10. Method according to Claim 1, **characterized in that** the clay (4) is calcined using a fuel (2), preferably coal, having a heating value in the range from 3500 to 35 000 kJ/kg.

11. Method for producing a cement by jointly grinding a cement clinker with the cement clinker substitute (10) produced by a method according to one or more of the preceding claims.

## Revendications

1. Procédé de production d'un substitut de clinker de ciment pouzzolanique ou hydraulique latent (10), procédé dans lequel de l'argile (4) est calcinée dans un calcinateur (5) à des températures comprises entre 500 et 1250 °C avec un combustible (2) contenant une substance minérale, le mélange résultant de la substance minérale du combustible (2) et de l'argile calcinée (4) formant le substitut de clinker de ciment pouzzolanique ou hydraulique latent (10),
**caractérisé en ce qu'**un combustible (2) est utilisé pour calciner l'argile de sorte que la proportion de la substance minérale introduite dans le substitut de clinker de ciment hydraulique (10) par le combustible (2) soit d'au moins 20 à 40 % en poids dans le substitut de clinker de ciment et **en ce qu'**un flux de substance supplémentaire, à savoir des cendres volantes ayant une teneur en carbone d'au moins 0,5 % en poids, est amené au calcinateur (5).

2. Procédé selon la revendication 1, **caractérisé en ce que**, pour calciner l'argile (4), on utilise un combustible dont la substance minérale introduite dans le substitut de clinker de ciment hydraulique (10) a un rapport Al₂O₃ à SiO₂ allant de 0,13 à 1,4 % en poids et une teneur en CaO inférieure à 80 % en poids.

3. Procédé selon la revendication 1, **caractérisé en ce que** les propriétés du substitut de clinker de ciment (10) sont ajustées par la distribution granulométrique du combustible (2) à utiliser pour la calcination et/ou par la composition de la substance minérale contenue dans le combustible (2).

4. Procédé selon la revendication 1, **caractérisé en ce que** l'aptitude au traitement du substitut de clinker de ciment (10) est ajustée à une distribution granulométrique spécifiée par broyage du combustible (2) .

5. Procédé selon la revendication 1, **caractérisé en ce que** la composition chimique de la substance minérale issue du processus de calcination est régulée par l'utilisation d'un mélange de combustibles dotés d'une composition différente de la substance minérale.

6. Procédé selon la revendication 1, **caractérisé en ce que** la calcination est réalisée dans un échangeur de chaleur à suspension, un four rotatif, un lit fluidisé ou un four à soles multiples.

7. Procédé selon la revendication 1, **caractérisé en ce que** l'argile (4) est broyée à des granulométries < 10 mm avant calcination.

8. Procédé selon la revendication 1, **caractérisé en ce que** la proportion de la substance minérale amenée au processus de calcination est mesurée de telle manière que, dans le substitut de clinker de ciment (10), un rapport de mélange spécifié d'argile calcinée (4) et de substance minérale est ajusté dans la gamme de 0,5:1 à 20:1.

9. Procédé selon la revendication 1, **caractérisé en ce que** l'on utilise pour la calcination de l'argile (4) un combustible (2), de préférence du charbon, ayant une granulométrie dans la gamme de 0,05 à 1 mm.

10. Procédé selon la revendication 1, **caractérisé en ce que** l'on utilise pour la calcination de l'argile (4) un combustible (2), de préférence du charbon, ayant un pouvoir calorifique dans la gamme de 3500 à 35000 kJ/kg.

11. Procédé de production d'un ciment par broyage conjoint d'un clinker de ciment avec le substitut de clinker de ciment (10), produit par un procédé selon une ou plusieurs des revendications précédentes.
